# EUROPEAN PATENT APPLICATION

(11) **EP 0 918 426 A1**
(43) Date of publication of application: **26.05.1999**
(21) Application number: 97120452.4
(22) Date of filing: 21.11.1997
(51) Int. Cl.: H04M 1/03, H04R 1/08

(54) **Out-door telephone handset construction**

(71) Applicant: Electrowatt Technology Innovation AG, 6301 Zug (CH)
(72) Inventor: Timothée, Martin, 07500 Guicherand (FR); Beaugiraud, Vincent, 07300 Tournon (FR)

(57) **Abstract**

A telephone handset is composed of two halves (21; 22) which form at one end of the handset a microphone compartment. Acoustical transparent openings (8) perforate a recessed part (23) of the upper halve (22) to allow for acoustical transparency. A microphone unit (12) is centred and kept in place within this compartment by an elastic ring (14). The space between the part (22, 23) with the openings (8) and a membrane of the microphone unit (12) is divided by a thin, acoustically transparent pad (19), which covers the whole acoustic sensitive area of the microphone unit (12). and which separates the space above the membrane . The acoustically transparent pad (19) separates the space above the membrane from the outside atmosphere and thus protects the membrane against moisture of the speaker's breath.

## Description

The present invention relates to an improved microphone compartment of a telephone handset according to the pre-characterising part of Claim 1.

Such handsets are used in telephones, especially payphones and mobile phones, and comprise, enclosed in cavities of the handset, at least a microphone unit and a loudspeaker unit.

A handset is known from GB 2 064 263 A. Its microphone unit is protected against moisture by a thin moisture and air tight sealing foil. The foil is held in position in front of the microphone unit by an annular foam ring. The foam ring is made from an open cell material to allow an exchange of air though the pores and to assure atmospheric pressure in the compartment formed by the sealing foil in front of the microphone unit.

Many documents (DE-C 25 16 207, DE-OS 25 24 194, WO 93/06697) deal with a hygienic protection of the microphone unit. These types of handsets provide a hygienic protection over the openings of the compartment in front of the microphone unit in form of a pad soaked with an antiseptic or bactericide to eliminate any bacteria which can thrive on the membrane of the microphone unit.

Blocks of open cell foam material are also known in connection with handsets for suppressing the breathing noise made by the listener (FR-A 2 628 926) and also eliminating reflection of acoustic waves and feedback between the loudspeaker and the microphone of the handset (CA 1199138, EP-A 0 150 349) or between the loudspeaker and the body of the handset (DE-C 44 01 822).

The microphones may be exposed to moisture originating from respiration of the user. This problem will affect acoustical behaviour of the handsets mentioned above if used under extreme out-door conditions where the temperature may fall below zero Centigrades. The steam of the breath will condense and freeze on the parts of the microphone and deteriorate the acoustic behaviour (efficiency) of the telephone set.

US-A 5,208,789 mentions moisture in connection with the efficiency of a microphone but only with reference to surface leaking currents occurring due to moisture which cause a loss of bias voltage of a condenser microphone.

The present invention provides a telephone handset of a cheap and simple construction which eliminates the influence of moisture on the acoustical behaviour of the handset microphone.

This goal will be met according to the present invention by the characterising features of Claim 1.

A complete understanding of the present invention will be accomplished by reading the detailed description of a preferred embodiment thereof in conjunction with the drawings,
wherein
- Figure 1: is a plain view of a handset,
- Figure 1a: a microphone unit from top and in crossection,
- Figure 2: shows a cross section of a microphone compartment,
- Figure 3: detailed view of a foam pad holder, and
- Figure 4: another embodiment of the handset.

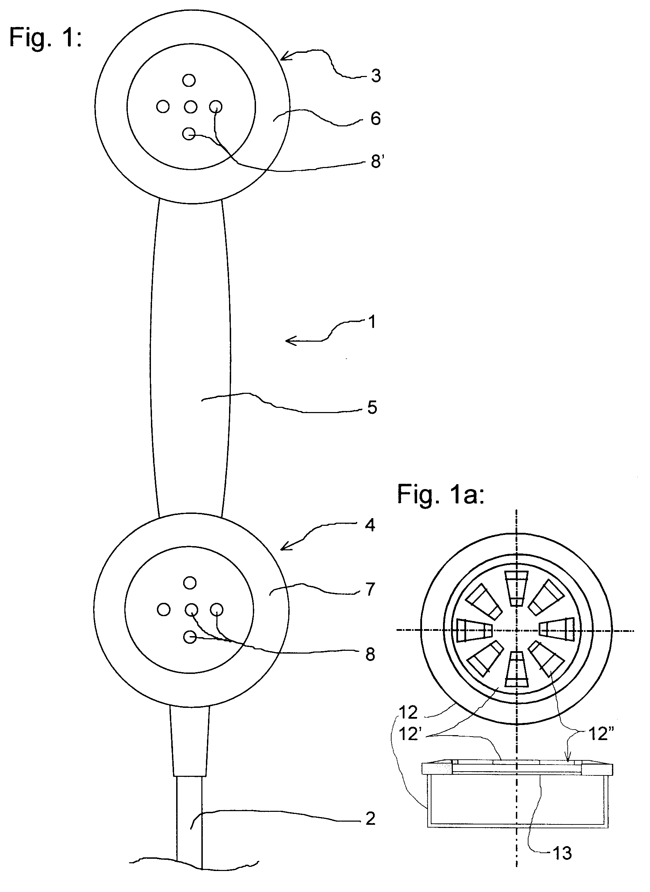

In figure 1 the reference number 1 denotes a handset with a cable 2 to be connected to a telephone set not shown here. The handset 1 is of the substantially known type and comprises two housings 3 and 4 with a compartment connected by a handle 5, all made of plastics. Each of the compartments are closed with a cap 6 and 7 which may be screwed on or snapped on or otherwise fixed to the housing 3 and 4, respectively. The caps 6 and 7 have small openings 8, 8' to let pass acoustic waves. The first housing 3 or ear piece encloses a receiver (or loudspeaker) transforming the electrical signals into acoustical waves, the second housing 4 is known as the mouthpiece with a microphone.

Figure 1a shows a microphone unit 12 from top and in cross-section. The microphone unit 12 is enclosed in a metal case containing a transducer, circuitry and a membrane 13 of which only the membrane 13 is shown here. A top lid 12' covers the front of the microphone unit 12 and faces the cap 7 in operation. The membrane 13 is recessed within the metal case of the microphone unit 12 well below the top lid 12' and is allowed to vibrate freely. The acoustic waves from the speaker's mouth entering the housing 4 (figure 1) through the openings 8 and tiny slots 12'' in the lid 12' reaching the membrane 13 are transposed into minute mechanical vibrations of the membrane 13 which in turn are transformed into electrical signals by the transducer of the microphone unit 12.

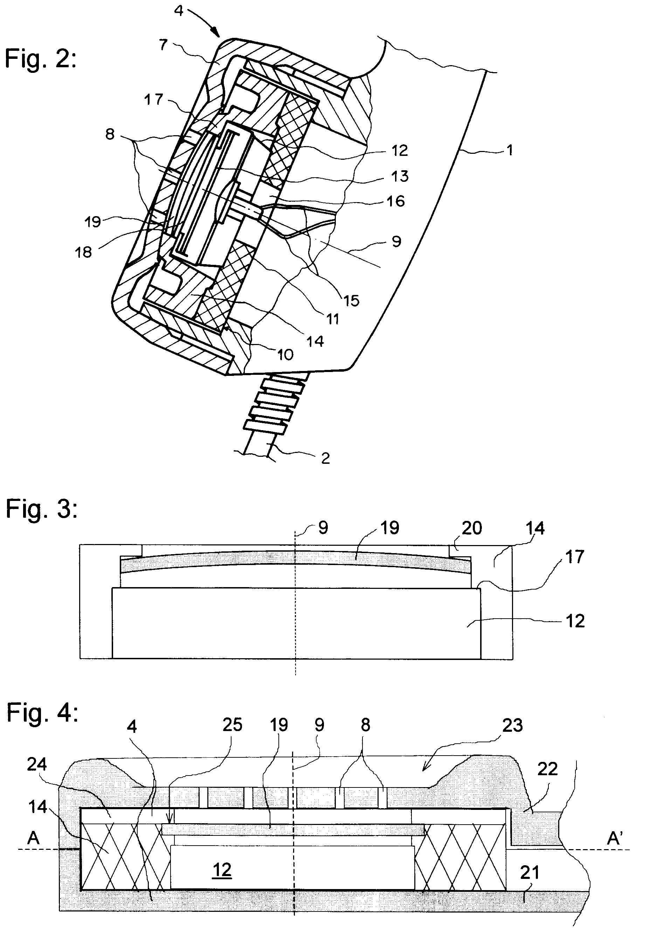

Figure 2 is a cross section of an embodiment of the second housing 4 having an axial symmetric front part. Its axis of rotation is denoted by the reference number 9. The cap 7 is screwed on the housing by rotation of the cap 7. The second housing 4 also provides an entry for the cable 2 into the handset 1. Below the cap 7 the inner wall of the compartment of the second housing 4 is cylindrical. This cylindrical wall ends further down at an annular projection 10 towards the axis 9. If the cap 7 is removed, a disk 11 is inserted into the compartment and forms the bottom thereof while resting on the projection 10. The plane of the disk 11 is perpendicular to the axis 9, and centred thereon, and provides the support for a microphone unit 12. The microphone unit 12 is placed into the compartment of the second housing 4 so that the bottom of the microphone unit 12 is placed on the surface of the disk 11.

The microphone unit 12 is centred within the compartment by an elastic ring 14 made from rubber or plastic. From the bottom of the microphone unit 12 emerge wires 15 for the electrical connection to the cable 2 which are fed though a hole 16 in the disk 11. The elastic ring 14 is centred on the axis 9, too, and has a shoulder 17 which faces the cap 7 and extends towards its axis 9. The shoulder 17 clamps down the rim of the top lid 12' (figure 1a) and therefore the microphone unit 11 if after closing the compartment of the second housing 4 with the cap 7, the inner side of the cap 7 forces the shoulder 17 onto the rim of the top lid 12', that the bottom of the microphone unit 12 is pressed against the disk 11. The microphone unit 12 is therefore centred on the axis 9 and is kept securely in place by the ring 14. The shoulder 17 may be limited towards the axis 9 by the a coaxial cylindrical wall 18 having a height typically of less than 5 mm and forming a circular opening with a diameter of about 30 mm. In another embodiment, the top lid 12' carries a rim limiting the shoulder 17 on the outside and acts, via its inner side, as the coaxial cylindrical wall 18.

The circular opening is closed by a disk shaped pad 19 separating the volume containing the membrane 13 from the outside world. The pad 19 is cut from a sheet of acoustically transparent foam material with a thickness of less than 5 mm. The thickness d is chosen so that the acoustical transparency is sufficiently high; a useful value may be e.g. approximately d = 1,5 mm. The pad 19 has a diameter slightly larger than the circular opening of the wall 18 and has to be elastically deformed when placed into this circular opening of the wall 18. The pad 19 acquires therefore the form of a dome extending over the membrane 13 and is held securely in place. The pad 19 divides the space between the cap 7 and the membrane 13 so that the space above the membrane 13 is not connected directly to the outside atmosphere.

The dome shaped pad 19 is not allowed to touch the inner side of the cap 7, otherwise dust and buccal projections may clog up the openings 8 in short time. A clearance of several millimetres, e.g. 1 to 2 mm, between the openings 8 and the pad 19 is sufficient to prevent clogging.

Advantageously, the foam material is of the open cell type and may be made from polyester, polyurethane, polyether etc. having a density of less than 65 kg per m³ and a pore density of up to 10 pores per mm, preferably 2 to 4 pores per mm (= 50 and 100 PPI (pores per inch)). The pores allow air to migrate through the pad 19 to equalise the atmospheric pressures on both sides of the pad 19.

Figure 3 shows another embodiment of the ring 14 and the pad 19. The inner wall of the ring 14 is composed of three cylinder walls of different diameters with the common rotational axis 9. The cylinder with the smallest diameter is located at the top of the drawing of figure 3 to face the cap 7 (figure 2) whereas the one with the largest diameter encloses the microphone unit 12 and faces the disk 11 (figure 2). As shown in the cross sectional drawing of figure 3, the transition of the largest cylinder to the middle one forms the shoulder 17 keeping the microphone unit 12 in place. The transition between the middle to the smallest cylinder forms a stop 20 for the pad 19 in order to maintain the proper distance of the pad 19 to the cap 7.

This handset has the advantage that it may be used under extreme out-door conditions where the temperature may fall below zero Centigrades. Moisture from the speaker's mouth entering the housing 4 through the openings 8 are adsorbed on the large surface of the open cells of the pad 19. At temperature well below zero Centigrades, the moisture will freeze into tiny crystals which may sublime. Larger droplets may fill one or the other cell of the pad but do not change the acoustical transparency noticeably when frozen. In contrast, without this protective pad, the moisture will reach the tiny slots 12'' (figure 1a) and the membrane 13. Especially on the metallic top lid 12' (figure 1a) which has a good heat conductivity the moisture will condense and freeze, and ice crystals will grow and clog up the tiny slots 12''. Being frozen there, the moisture and ice, respectively, will adversely affect the acoustical efficiency of the microphone unit 12.

In the cross sectional drawing of figure 4, a very simple embodiment of the second housing 4 is shown. The handset 1 (figure 1) is composed of two relatively flat halves, parts 21 and 22, which are joined along the plane indicated by the hatched line A - A'. The cap 7 (figure 2) is integrated into the upper halve 22 forming the mouthpiece 23 facing the speaker's mouth. The mouthpiece 23 of the upper halve 22 is perforated by the openings 8 to allow for acoustical transparency of part 22 in the region of the mouthpiece 23. The ring 14 and a annular spacer 24 have the common axis 9 and form a grove 25 in which the pad 19 is held tightly in order to be kept clear of the membrane 13 (figure 2) and to be held at a determined distance to the openings 8. The annular spacer 24 may be part of the upper half 22. The ring 14 centres the microphone unit 12 on the axis 9 and secures the unit 12 in the microphone compartment below the openings 8.

The handset 1 described here is not limited to an accessory connected to the telephone set by a cable 2 (figure 1) as is common e.g. with public telephones. The protected microphone unit 12 according to the present invention may be used as well for mobile telephones, especially for the so called "handy" types comprising the whole telephone within the handset 1 and using radio links to a substation.

## Claims

1. A microphone compartment of a telephone handset (1) comprising a microphone unit (12) centred and held in place within the compartment by an elastic ring (14) and situated below acoustical transparent openings (8) of a part (7; 22, 23) closing the compartment, characterised in that the space between the part (7; 22, 23) with the openings (8) and the membrane (13) of the microphone unit (12) is divided in two by an acoustically transparent pad (19), and that the pad (19) extends, separated from the membrane, over the whole acoustic-sensitive area of the microphone unit (12) to protect the microphone unit (12) from deterioration of the acoustical efficiency by moisture entering through the openings (8).

2. A microphone compartment according to claim 1, characterised in that the acoustically transparent pad (19) has a clearance of 1 to 5 mm to the part (7; 22, 23) of the housing (4).

3. A microphone compartment according to claim 1 or 2, characterised in that a foam material is used for the acoustically transparent pad (19).

4. A microphone compartment according to claim 1 to 3, characterised in that the foam material used for the acoustically transparent pad (19) is made from polyester, polyurethane, polyether etc.

5. A microphone compartment according one of the claims 1 to 3, characterised in that the foam material of the acoustically transparent pad (19) is of the open cell type having a density less than 65 kg/m³.

6. A microphone compartment according to claim 4, characterised in that the foam material of the acoustically transparent pad (19) has a pore density of 2 to 4 pores per mm.

7. A microphone compartment according to any of the preceding claims 1 to 6, characterised in that the acoustically transparent pad (19) is dome shaped.
